## Europäisches Patentamt
## European Patent Office
## Office européen des brevets

(11) Veröffentlichungsnummer: **0 321 761 B1**

(12) # EUROPÄISCHE PATENTSCHRIFT

(45) Veröffentlichungstag der Patentschrift: **16.12.92**

(51) Int. Cl.5: **B01D 53/36**, B01J 37/00, B01J 35/02, B01J 35/04

(21) Anmeldenummer: **88120226.1**

(22) Anmeldetag: **03.12.88**

(54) **Katalysator zur Abgasreinigung von Verbrennungsmotoren.**

(30) Priorität: **22.12.87 DE 3743503**

(43) Veröffentlichungstag der Anmeldung:
**28.06.89 Patentblatt 89/26**

(45) Bekanntmachung des Hinweises auf die Patenterteilung:
**16.12.92 Patentblatt 92/51**

(84) Benannte Vertragsstaaten:
**AT BE CH DE ES FR GB IT LI NL SE**

(56) Entgegenhaltungen:
**DE-A- 2 555 038**
**GB-A- 2 007 994**

(73) Patentinhaber: **Schwäbische Hüttenwerke Gesellschaft mit beschränkter Haftung Wilhelmstrasse 67 Postfach 3280 W-7080 Aalen-Wasseralfingen(DE)**

(72) Erfinder: **Härle,Hans A.,Dipl.-Ing. Röttinger Strasse 38 W-7085 Bopfingen(DE)**

(74) Vertreter: **Lorenz, Werner, Dipl.-Ing. Fasanenstrasse 7 W-7920 Heidenheim(DE)**

# Beschreibung

Die Erfindung betrifft einen Katalysator zur Abgasreinigung von Verbrennungsmotoren mit einem Katalysatorkörper, der aus formgepreßten und anschließend gesinterten Metalldrahtstücken oder Metallspänen besteht, und der von den Abgasen durchströmt ist.

Katalysatoren in der Kfz-Motorentechnik sind zunehmend im Einsatz, um schädliche Abgaskomponenten in unschädliche umzuwandeln, wobei insbesondere der Ausstoß von Kohlenmonoxyd, Kohlenwasserstoffen und Stickoxyden verringert werden soll.

Die wesentlichen Bestandteile eines katalytischen Abgasreinigungsgerätes sind der Katalysatorträger, bzw. Katalysatorkörper, dessen Edelmetallbeschichtung und ein den Katalysatorkörper umgebendes Gehäuse.

Als Träger für den Katalysator verwendet man im allgemeinen wabenartig aufgebaute Keramikzylinder mit kreisrundem oder ovalem Querschnitt. Diese Art hat sich bisher gegenüber anderen Trägerstrukturen, wie z.B. Granulat oder profilierten und gewickelten Blechbändern am stärksten durchgesetzt. Der Wabencharakter ergibt sich dabei durch eine vielzahl feiner Kanäle, die den Katalysatorkörper in Strömungsrichtung der Abgase durchziehen. Auf den Katalysatorkörper ist der eigentliche Katalysator aufgebracht, wofür man überwiegend Platin, Rhodium und Palladium einsetzt.

Problematisch ist insbesondere bei Verwendung eines Katalysatorkörpers aus Keramik dessen bruchsichere Lagerung durch das spröde Keramikmaterial. In Verbindung mit dem dünnwandigen Wabenmuster ist der Katalysatorkörper äußerst empfindlich gegen Erschütterungen, Schläge und andere mechanische Einflüsse. Zu berücksichtigen sind außerdem die Abgasimpulse und die hohen Abgastemperaturen, welche bis etwa 900 Grad C erreichen können.

Zur Vermeidung der Bruchgefahr durch äußere Einflüsse oder Eigenbewegungen des Keramikkörpers wird dieser in einer hochwarmfesten Drahtumhüllung gehalten, wobei durch sogenannte Bypass-Dichtungen dafür gesorgt werden muß, daß Abgase nicht am Keramikblock vorbei durch das Drahtgestrick strömen.

Der Keramikkörper und das Drahtgestrick sind im allgemeinen von einem Katalysatorgehäuse umhüllt, das zusätzlich die Aufgabe besitzt, den gegen rasche Temperaturänderungen, z.B. durch Spritzwasser und mechanische Schläge, empfindlichen Keramikkörper zu schützen.

Durch die aufwendige Herstellungmethode und die erforderliche sichere Verpackung des Katalysatorkörpers ist ein derartiger Katalysator relativ aufwendig und teuer.

Die GB-A-2 007 994 beschreibt ein Verfahren zur Abgasreinigung von Verbrennungsmotoren durch einen von den Abgasen durchströmten Filterkörper. Der Filterkörper ist aus Metalldrahtstücken formgepreßt und nach dem Formen gesintert. Zur Erzeugung von katalytischen Wirkungen kann dem Gewirr bzw. Gestrick aus Metalldrähten auch katalytisch wirkendes Material beigefügt werden. Das Gewirr oder Gestrick ist zwischen einer hinteren und einer vorderen Platte und einem Umfangsgehäuse eingebettet bzw. eingepreßt.

Nachteilig bei dieser vorbekannten Lösung ist jedoch, daß der Wirkungsgrad des Filters durch die äußeren Gegebenheiten festliegt und nachträglich nur noch schwer veränderbar ist und daß eine deutliche Leistungsminderung des Verbrennungsmotores hingenommen werden muß.

Der vorliegenden Erfindung liegt daher die Aufgabe zugrunde, einen Katalysator zu schaffen, der die vorstehend genannten Nachteile beseitigt, insbesondere der eine gute oder sogar noch verbesserte Katalysatorwirkung bei einfachem Aufbau besitzt und der die Motorleistung des Motores, dessen Abgase gereinigt werden sollen, weniger negativ beeinflußt.

Erfindungsgemäß wird diese Aufgabe dadurch gelöst, daß der Katalysatorkörper aus mehreren hintereinander angeordneten Formsegmenten unterschiedlicher Dichte gebildet ist.

Mit dem erfindungsgemäßen Katalysatorkörper wird ein bedeutender Nachteil bei den bekannten Katalysatoren weitgehend reduziert. Bekanntlich muß durch den Einbau eines Katalysators und den dadurch auftretenden Strömungswiderstand eine Leistungsminderung des Verbrennungsmotores hingenommen werden, was insbesondere für Vollastbetrieb gilt.

Der erfindungsgemäße Katalysatorkörper ergibt durch seine Aufteilung in mehrere hintereinander liegende Formsegmente einen geringeren Strömungswiderstand, was sich damit positiv auf die Leistung des Verbrennungsmotores auswirkt.

Bekanntlich steigt der Strömungswiderstand über die Länge des Katalysatorkörpers an. Verwendet man nun in erfindungsgemäßer Weiterbildung mehrere hintereinander angeordnete und aneinander liegende Formsegmente, wobei deren Dichte in Strömungsrichtung des Abgases abnehmen kann, so läßt sich der Strömungswiderstand noch stärker reduzieren.

Der erfindungsgemäße Katalysatorkörper besitzt eine hohe Aufnahmefähigkeit für Infiltrationen bzw. für eine Durchströmung. Außerdem weist er im Vergleich zu den bekannten Arten eine wesentlich höhere Umströmungsoberfläche auf.

Da der erfindungsgemäße Katalysatorkörper nicht bruchanfällig ist, kann der Katalysator selbst einfacher im Aufbau sein. So ist keine elastische Lagerung notwendig und ggf. kann sogar ein Schutzrohr bzw. ein Gehäuse entfallen.

Als Größen für die Metalldrahtstücke oder die Metallspäne sind Durchmesser bzw. Breiten von ca. 0,1 - 5 mm und Längen von 0,5 - 30 mm möglich. Dabei wird im allgemeinen die Länge bzw. Breite jedoch stets deutlich größer sein als der Durchmesser.

Als Werkstoffe für die Metalldrahtstücke sind die verschiedensten Materialien möglich, wobei lediglich darauf zu achten ist, daß diese gegenüber den zu erwartenden hohen Temperaturen beständig sind. So sind z.B. ferritischer und austenitischer Stahl, Sonderlegierungen, und dgl. denkbar.

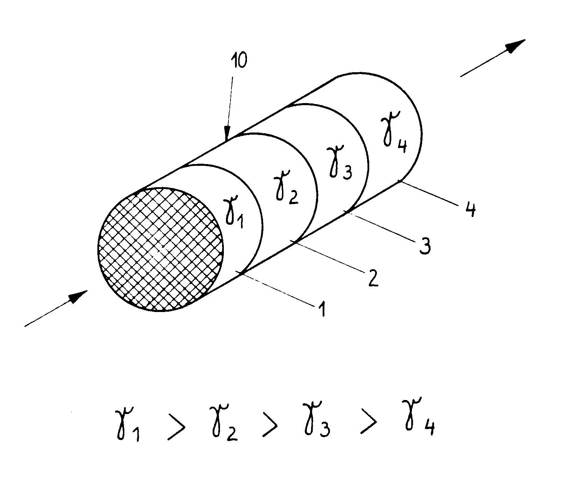

Nachfolgend ist anhand der Zeichnung ein erfindungsgemäßer Katalysatorkörper prinzipmäßig dargestellt.

Der Katalysatorkörper wird in bekannter Weise durch Formpressen hergestellt und anschließend gesintert, wobei die Form so gewählt ist, daß eine Zylinderform für den Katalysatorkörper 10 entsteht.

Zur Verringerung des Strömungswiderstandes ist der Katalysatorkörper 10 aus mehreren hintereinander angeordneten Zylindersegmenten 1-4 gebildet. Die einzelnen Formsegmente sind dicht aneinandergepreßt und deren Dichte $\gamma$ nimmt in Durchströmungsrichtung von $\gamma_1$ - $\gamma_4$ ab.

Als Ausgangsmaterial können statt kurzer Metalldrahtstücke auch Metallspäne verwendet werden, die man z.B. durch Stanzen, Drehen, Hobeln oder Fräsen in Breiten vom 1-5 mm und Längen von 1-20 mm, vorzugsweise von 2-3 mm und 5-10 mm, erhält. Dabei kann sich die Breite entsprechend der Spanform auch über die Länge ändern.

**Patentansprüche**

1. Katalysator zur Abgasreinigung von Verbrennungsmotoren mit einem Katalysatorkörper (10), der aus formgepreßten und anschließend gesinterten Metalldrahtstücken oder Metallspänen besteht, und der von den Abgasen durchströmt ist,
   **dadurch gekennzeichnet,** daß
   der Katalysatorkörper (10) aus mehreren hintereinander angeordneten Formsegmenten (1-4) unterschiedlicher Dichte gebildet ist.

2. Katalysator nach Anspruch 1,
   **dadurch gekennzeichnet,** daß
   die Dichte der Formsegmente (1-4) in Strömungsrichtung des Abgases abnimmt.

3. Katalysator nach Anspruch 1 oder 2,
   **dadurch gekennzeichnet,** daß
   die Metalldrahtstücke oder Metallspäne Durchmesser bzw. Breiten von 0,1 - 5 mm und Längen von 0,5 - 30 mm besitzen.

4. Katalysator nach Anspruch 3,
   **dadurch gekennzeichnet,** daß
   die Metalldrahtstücke oder Metallspäne Durchmesser bzw. Breiten von 1 - 3 mm und Längen von 2 - 10 mm besitzen.

**Claims**

1. Catalyst for cleaning exhaust gases from combustion engines, comprising a catalyst body (10) consisting of compression moulded and then sintered metal wire pieces or metal chips and traversed by the exhaust gases, characterised in that the catalyst body (10) is formed by a plurality of moulded segments (1-4) of different densities arranged one behind the other.

2. Catalyst according to claim 1, characterised in that the density of the moulded segments (1-4) decreases in the flow direction of the exhaust gas.

3. Catalyst according to claim 1 or claim 2, characterised in that the metal wire pieces or metal chips have diameters or widths of 0.1 - 5 mm and lengths of 0.5 - 30 mm.

4. Catalyst according to claim 3, characterised in that the metal wire pieces or metal chips have diameters or widths of 1 - 3 mm and lengths of 2 - 10 mm.

**Revendications**

1. Catalyseur pour l'épuration des gaz d'échappement de moteurs à combustion, comportant un corps de catalyseur (10) qui est constitué de morceaux de fils ou de copeaux métalliques pressés dans un moule et ensuite frittés et qui est traversé par les gaz d'échappement, **caractérisé** en ce que le corps de catalyseur (10) est formé de plusieurs segments moulés (1-4) de densités différentes, disposés l'un derrière l'autre.

2. Catalyseur selon la revendication 1, **caractérisé** en ce que la densité des segments moulés (1-4) est décroissante dans le sens d'écoulement des gaz d'échappement.

3. Catalyseur selon la revendication 1 ou 2, **caractérisé** en ce que les morceaux de fils ou copeaux métalliques ont des diamètres ou largeurs de 0,1-5 mm et des longueurs de 0,5-30 mm.

4. Catalyseur selon la revendication 3, **caractéri-**

**sé** en ce que les morceaux de fils ou copeaux métalliques ont des diamètres ou largeurs de 1-3 mm et des longueurs de 2-10 mm.

$$\gamma_1 > \gamma_2 > \gamma_3 > \gamma_4$$